# EUROPÄISCHE PATENTSCHRIFT

(11) **EP 0 698 300 B1**
(45) Veröffentlichungstag und Bekanntmachung des Hinweises auf die Patenterteilung: **05.11.1997**
(21) Anmeldenummer: 94913013.2
(22) Anmeldetag: 22.04.1994
(51) Int. Cl.: H01M 8/24

(54) **POLYMER-BRENNSTOFFZELLE**
POLYMER FUEL CELL
PILE A COMBUSTIBLE EN POLYMERE

(30) Priorität: 04.05.1993 DE 4314745
(43) Veröffentlichungstag der Anmeldung: 28.02.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: LEDJEFF, Konstantin, D-79189 Bad Krozingen (DE); NOLTE, Roland, D-79211 Denzlingen (DE)
(74) Vertreter: Pfenning, Meinig & Partner
(86) Internationale Anmeldenummer: DE9400458
(87) Internationale Veröffentlichungsnummer: WO9425995

(56) Entgegenhaltungen:
- AT-B- 389 020
- GB-A- 2 178 223
- NL-A- 8 702 138
- US-A- 5 176 966
- EXTENDED ABSTRACTS, Bd.87, Nr.2, 18. Oktober 1987, PRINCETON, NEW JERSEY US Seiten 250 - 251 W. HERTWIG 'NEW APPROACH TO A LOW TEMPERATURE SOLID STATE FUEL CELL'

## Beschreibung

Die Erfindung betrifft Brennstoffzellen, deren Einzelkonponenten (Bauteile) Stromableiter, polymeren Festelektrolyten in Form von Membranen, Gasverteilerring und Stromverteiler aus ein und demselben Grundpolymer gefertigt sind, wobei einzelne Bauteile durch ein Verbundverfahren zusammengefügt sind.

Brennstoffzellen werden entweder als separate Einzelzelle cder als sogenannte Brennstoffzellenstack aufgebaut. Bei der Stackbauweise werden eine gewisse Anzahl von Einzelzellen hintereinandergeschaltet, um eine entsprechend höhere Ausgangsspannung zu realisieren. Die am meisten eingesetzte 3rennstoffzelle, eine Wasserstoff-/Sauerstoff-Brennstoffzelle ist dabei hauptsächlich aus folgenden Einzelbauteilen aufgebaut: einem Stromableiter, einem Wasserstoff-Gasverteilerring, einem Ionenaustauschermembran, Stromverteilerstrukturen und Sauerstoff-Gasverteilerringe. Im Falle von Einzelzellen werden als Stromableiter positive bzw. negative Platten verwendet, im Falle von Brennstoffzellenstacks werden als Stromableiter bipolare Platten eingesetzt, die zu einem entsprechenden Brennstoffzellenstack aufgebaut werden. Im Stand der Technik werden bisher die einzelnen Bauteile über Dichtungsringe miteinander verbunden.

Diese Verfahrensweise besitzt jedoch erhebliche Nachteile. Die Verwendung von Dichtungsmaterialien ist generell nicht unkritisch. Das Material muß nämlich neben den geforderten Dichtungseigenschaften reinen und feuchten Sauerstoff und Wasserstoff bei erhöhter Temperatur (ca. 80°C) in Dauerbelastung widerstehen, ohne daß eine Versprödung bzw. Degradation eintritt. Die Verwendung von Materialien mit Zusatzstoffen, bzw. Weichmachern, die dafür vorgeschlagen wird, hat dann aber zur Folge, daß diese Stoffe im Laufe der Zeit ausdiffundieren, sich anderweitig ablagern oder den Katalysator vergiften, was zum Ausfall des Systems führen kann. Materialien ohne Zusatzstoffe erfordern häufig einen hohen Anpreßdruck, um die Dichtwirkung zu gewährleisten. Dies wiederum erfordert mechanisch extrem stabile Membrane, die diesen Belastungen standhalten können. Dünne Membranen, deren Einsatz aufgrund ihrer sehr guten Ionenleitfähigkeit wünschenswert ist, sind mit den herkömmlichen Techniken des Standes der Technik nicht möglich.

Vor allem bei Brennstoffzellenstacks wirft die Verwendung von Dichtungsmaterialien noch weitere Probleme auf. Bedingt durch die mechanische Deformierbarkeit des Dichtungsmaterials kommt es zu einer Veränderung der geometrischen Lage der Einzelkomponenten zueinander. Insbesondere ist bei der zwischen zwei Dichtungsringen eingeklemmten Ionenaustauschermembran die Bildung von Knicken im Membranmaterial möglich, die während des Betriebs potentielle Bruchstellen darstellen. Bei Materialversagen kann es dann zum direkten Kontakt Wasserstoff/Sauerstoff kommen, was den Ausfall der Zelle mit sich zieht.

Ausgehend von diesem Stand der Technik ist es die Aufgabe der vorliegenden Erfindung, eine Brennstoffzelle bzw. einen Brennstoffzellenstack vorzuschlagen, bei dem die Verwendung von Dichtungsmaterial zwischen den einzelnen Bauteilen minimiert bzw. ganz vermieden wird.

Die Lösung dieser Aufgabe erfolgt durch die kennzeichnenden Merkmale des Anspruchs 1. Die Unteransprüche 2 bis 10 zeigen vorteilhafte Weiterbildungen auf.

Durch die erfindungsgemäße Lösung, nämlich die Herstellung aller Bauteile aus ein und demselben Grundpolymer, bzw. einer modizifierten Form davon für die einzelenen Bauteile, wird nun erreicht, daß die einzelnen Bauteile untereinander durch ein Verbundverfahren zusammengefügt werden können und dadurch Dichtungsmaterial minimiert bzw. ganz vermieden wird.

Entscheidene Bedeutung kommt dabei dem für die Herstellung der einzelnen Bauteile vorgesehenen thermoplastischen Polymer zu.

Als thermoplastisches Polymer sind dabei nur solche geeignet, die den spezifischen Anforderungen in einer Wasserstoff-/Sauerstoff-Brennstoffzelle hinsichtlich der mechanischen und chemischen Forderungen genügen.

Das vorgesehene thermoplastische Polymer muß dabei als Konstruktionswerkstoff für tragende Teile des Brennstoffzellenaufbaus geeignet sein, d.h. insbesondere Formstabilität unter Druck und bei erhöhten Temperaturen aufweisen. Das Material darf weiterhin chemisch durch trocknen und feuchten Wasserstoff bzw. Sauerstoff nicht angegriffen werden und muß zusätzlich hydrolysestabil sein.

Weiter ist gefordert, daß das thermoplastische Material, unter Beibehaltung aller vorgenannter Eigenschaften, bis mindestens 80° stabil bleibt.

Diese Eigenschaften allein sind notwendig, aber für das erfindungsgemäße Konzept der Polymerbrennstoffzelle nicht ausreichend. Es muß weiterhin möglich sein, das Material so zu modifizieren, daß bestimmte, für die jeweiligen Einzelbauteile notwendigen physikalischen oder chemischen Eigenschaften realisiert werden können. Für die Stromableiter, d.h. für die positiven und negativen Platten bzw. die bipolaren Platten, wie auch für die Stromverteilerstrukturen muß es möglich sein, das polymere Grundmaterial elektrisch leitfähig zu machen. Für die Ionenaustauschermembran muß es möglich sein, dasselbe Material ionisch leitfähig zu realisieren.

Erfindungsgemäß werden als polymere Grundmaterialien solche thermoplastischen Polymere vorgeschlagen, die ein "aromatisches Rückgrat" besitzen und in geeigneten Lösungsmitteln löslich sind. Der Polymerisationsgrad des Grundpolymers muß danach ausgewählt werden.
Solche Polymere sind:
Polysulfone (I)

   [-SO₂-R₁-O-R₂-C(CH₃)₂-R₃-O-R₄-]ₓ (I)

   mit
   - R₁, R₂, R₃, R₄ =: -C₆H₄-, -C₁₀H₆-;
Polyethersulfone (II)

   [[-SO₂-R₁-]ₙ[-O-R₂-]ₘ]ₓ (II)

   mit
   - R₁, R₂ =: -C₆H₄-, -C₁₀H₆- ;
   - n, m =: 1,2
Polyetherketone (III)

   [[-CO-R₁-]ₙ[-O-R₂-]ₘ]ₓ (III)

   mit
   - R₁, R₂ =: -C₆H₄-, -C₁₀H₆- ;
   - n, m =: 1,2
Polyphenylensulfide (IV)

   [-S-R₁-]ₓ (IV)

   mit
   - R₁ =: -C₆H₄-
wobei x in weiten Grenzen variieren kann, jedoch gefordert ist, daß das Polymer in einem geeigneten Lösungsmittel löslich ist. X liegt bevorzugt deshalb zwischen 5 und 10.000 je nach Polymer und Lösungsmittel.

Erfindungsgemäß ist es aber auch möglich, daß Copolymere der vorstehend beschriebenen Monomeren eingesetzt werden.

Besonders bevorzugt ist die Verwendung von Polyethersulfon (PES). PES zeichnet sich durch hohe Zugfestigkeit, Schlagzähigkeit, Wärmeform- und Chemikalienbeständigkeit aus, und verhält sich gleichzeitig flammwidrig und ist selbstverlöschend. Deshalb ist PES als thermoplastisches Polymer für die erfindungsgemäße Verwendung besonders geeignet.

PES besitzt zudem keine aliphatischen CH-Bindungen, sondern nur aromatische CH-Bindungen. Aufgrund der höheren Bindungsenergie aromatischer CH-Bindungen gegenüber aliphatischen, sind solche Substanzen wesentlich stabiler gegenüber einer radikalisch verlaufenden Oxidation durch Sauerstoff und besitzen so die Stabilitätsvoraussetzungen für den Einsatz in sauerstoffhaltiger Umgebung in der Brennstoffzelle. PES besitzt zudem keine leicht hydrolysierbaren funktionellen Gruppen, wie z.B. Estergruppierungen, sondern nur sehr schwer angreifbare Sulfon- oder Ethergruppen und verhält sich damit sehr stabil gegenüber Hydrolysereaktionen. Vorteilhaft ist bei PES weiterhin, daß aufgrund der Tatsache, daß PES durch Spritzgießen oder Extrusion verarbeitet werden kann, es auch möglich ist, einzelne Bauteile untereinander aus PES durch Kunststoffschweißen oder Verklebung miteinander zu verbinden. Zusätzlich können durch Einarbeitung leitfähiger Partikel als Modifizierungstechnik elektronisch leitfähige Kunststoffe hergestellt werden. Die aromatischen Ringe in Polymerrückgrat bieten die Möglichkeit, auf chemischem Weg ionische Gruppierungen einzuführen, um so ionenleitfähige Kunststoffe herzustellen. PES besitzt somit sämtliche relevanten Eigenschaften, die bei der Verwendung als Basismaterial für die Polymer-Brennstoffzellen erforderlich sind.

Mit diesem Grundpolymer, bzw. mit dessen modifizierten Formen, können dann die einzelnen Bauteile gefertigt werden.

Zur Herstellung der Stromableiter, d.h. der positiven und negativen Platten, bzw. der bipolaren Platten muß das polymere thermoplastische Basismaterial zur Erzielung einer elektrischen Leitfähigkeit modifiziert werden. Dies wird dadurch erreicht, daß leitfähige Substanzen, wie z.B. Leitfähigkeitsruß, Graphit, Kohlenstoff-Fasern, elektronisch leitfähige Polymer-partikel oder Fasern (z.B. Polyanilin), Metallteilchen, Flocken oder Fasern oder metallisiertes Trägermaterial zugesetzt werden. Die Einarbeitung von leitfähigen Partikeln kann dabei auf verschiedene Art erfolgen:
1. Die leitfähigen Partikel werden in das aufgeschmolzene Polmyer gegeben, wobei z.B. durch Kneter oder durch Mischer nach der Dispergierung eine homogene Feinverteilung erreicht wird.
2. Die leitfähigen Partikel werden mit Hilfe von Rührern oder Mischern in das in einem Lösemittel gelöste thermoplastische System eingerührt und so lange nachdispergiert, bis die gewünschte Feinverteilung erreicht ist.
3. Die leitfähigen Partikel werden mit dem pulverförmigen Polymer ohne Aufschmelzen des Polymeranteils intensiv vermischt und anschließend heiß verpreßt. Hierbei erfolgt keine homogene Verteilung der leitfähigen Partikel in dem zu modifizierenden Material, sondern die leitfähigen Partikel umhüllen die diskret vorliegenden Polymerpartikel.

Die Leitfähigkeit der Gemische hängt dabei außer von den Eigenschaften und der Zusammensetzung der Ausgangsprodukte (leitfähige Partikel), Polymer, auch von den Verarbeitungsparametern ab. Im Falle eines Ruß-Polymer-Gemisches sind für die leitfähige Ausrüstung Rußkonzentrationen zwischen 5 und 70%, vorzugsweise zwischen 15 und 50% erforderlich. Die mechanischen Eigenschaften der modifizierten Produkte verändern sich dahingehend, daß Steifigkeit und Wärmeformbeständigkeit erhöht, Dehnung und Schlagzähigkeit herabgesetzt werden. Diese Änderungen sind für den Einsatz in der Polymer-Brennstoffzelle unkritisch, da hauptsächlich gute Steifigkeit und Wärmeformbeständigkeit gefordert sind.

Die Gasverteilerringe können entweder aus unmodifizierte polymeren Grundmaterial oder aus elektrisch leitfähigem Polymermaterial, wie vorstehend beschrieben, hergestellt werden.

Die Ionenaustauschermembran ist für den Protonentransport zwischen der Wasserstoff- und Sauerstoffseite einer Einzelzelle zuständig, d.h. sie muß aus kationenleitfähigem Material bestehen. Diese Fähigkeit der Kationenleitung in wäßriger Umgebung wird in einem Polymermaterial i.a. dadurch erreicht, daß auf chemischem Weg Säuregruppierungen wie z.B. Carbonsäuren, (-CO₂H), Sulfonsäuren (-SO₃H) oder Phosphonsäuren (-PO₃H₂) eingeführt werden, die in wäßriger Umgebung in Ionen dissoziieren.

Typischerweise werden für diese hochionenleitfähigen Membranen die stark sauren Sulfonsäuregruppen eingesetzt. Die für die Polymer-Brennstoffzelle geeigneten Grundmaterialien enthalten aromatische Ringsysteme, an denen literaturbekannte Substitutionsreaktionen unter Einführung von ionischen Gruppen durchgeführt werden können. Geeignete Reagenzien zur Einführung von Sulfonsäuregruppen sind beispielsweise Schwefeltri- oxid oder Chlorsulfonsäure. Der zum Erreichen hoher Leitfähigkeiten benötige Sulfonierungsgrad bewegt sich im Bereich 30 bis 200%, typischerweise im Bereich zwischen 50 und 100%.

Die Membran kann in ihrer gesamten Fläche aus ionenleitendem Material bestehen (1-Komponenten-Membran). Dieser Aufbau wird insbesondere dann gewählt werden, wenn keine feste Verbindung zu anderen Komponenten der Brennstoffzelle nötig ist. Die Membran kann des weiteren aus 2 Materialien aufgebaut sein (2-Komponenten-Membran). Dabei besteht die Membran aus einer inneren, ionenleitenden Fläche, die von einer äußeren, nicht ionenleitenden und aus dem Grundmaterial bestehenden Fläche umschlossen wird. Dies hat den Vorteil, daß im Fall einer flächigen Anbindung der Membran an den Gasverteilerring mittels Kleben oder Schweißen zwei völlig identische Materialien miteinander verbunden werden, was zu einer stabileren Verbindung der beiden Teile führt. Weiterhin verhindert man durch den Aufbau als 2-Komponenten-Membran die durch die hohe Quellung ionischer Polymere in Wasser hervorgerufene unerwünschte Längen- und Volumenänderungen des Randbereichs, da das nichtionische Grundmaterial nur unwesentlich in Wasser quillt. Die Herstellung dieses Membranaufbaus kann auf unterschiedliche Art und Weise erfolgen:
1.) Eine Folie aus dem unmodifizierten Grundmaterial, aus der dort ein Stück herausgestanzt ist, wo sich der icnenleitende Bereich befinden soll, wird auf einer Unterlage fixiert. Das ionenleitende Material wird in einem Lösemittel gelöst, in dem auch das unmodifizierte Material löslich ist. Die Lösung wird in die Aussparung der Folie gegossen, so daß die Ränder der Folie angelöst werden. Die Membranfolie wird anschließend bei Temperaturen im Bereich 20 - 250°C getrocknet und von der Unterlage entfernt.
2.) Eine Folie aus dem unmodifizierten Grundmaterial, aus der dort ein Stück herausgestanzt ist, wo sich der ionenleitende Bereich befinden soll, wird auf einer Unterlage fixiert. Ein Stück Folie aus dem ionenleitenden Material, welches genau die Form der Aussparung besitzt, wird in der Aussparung fixiert. Ein Klebstoffsystem verbindet die beiden Folien. Bevorzugt besteht das Klebstoffsystem aus einem Polymer, welches in einem Lösemittel gelöst ist, in dem sowohl das Grundmaterial als auch das ionenleitende Material löslich sind. Für die Polymerkomponente des Klebstoffsystems kommen hauptsächlich das unmodifizierte Grundmaterial selber, das ionenleitende Material oder Mischungen, Block- oder Pfropfcopolymere der beiden vorher genannten Stoffe in Frage.
3.) Eine Folie aus dem unmodifizierten Grundmaterial, aus der dort ein Stück herausgestanzt ist, wo sich der ionenleitende Bereich befinden soll, wird auf einer Unterlage fixiert. Anschließend wird eine Folie aus ionenleitendem Material über die Aussparung gelegt. Dabei ist die Fläche der ionenleitenden Folie etwas größer als die der Aussparung, so daß sich beide Folien teilweise überlappen. Die überlappenden Ränder können mit einem Klebstoffsystem verklebt werden, wie es im vorhergehenden Punkt beschrieben ist. Abschließend werden beide Folien unter Druck verschweiSt, bis eine ebene Membranfolie resultiert. Dabei ist insbesondere darauf zu achten, daß die innere ionenleitende Fläche thermisch nur so weit belastet wird, daß keine Austauscherfunktionen zerstört werden. Im überlappenden Bereich dürfen die Austauscherfunktionen zerstört werden.
4.) Eine Folie aus dem unmodifizierten Grundmaterial, aus der dort ein Stück herausgestanzt ist, wo sich der ionenleitende Bereich befinden soll, wird auf einer Unterlage fixiert. Anschließend wird eine Folie aus ionenleitendem Material über die Aussparung gelegt. Dabei ist die Fläche der ionenleitenden Folie etwas größer als die der Aussparung, so daß sich beide Folien teilweise überlappen. Die überlappenden Ränder können mit einem Klebstoffsystem verklebt werden, wie es im vorhergehenden Punkt beschrieben ist. Eine zweite Folie aus dem unmodifizierten Grundmaterial mit analogen Maßen wie die erste, wird auf das System aufgelegt, wobei ebenfalls eine Verklebung mit den überlappenden Bereichen der ionenleitenden Folie möglich ist. Abschließend werden die Folien unter Druck verschweißt, bis eine ebene Membranfläche entsteht. Auch hier ist darauf zu achten, daß die innere ionenleitende Fläche thermisch nur so weit belastet wird, daß keine Austauscherfunktionen beschädigt werden. Im überlappenden Bereich dürfen die Austauscherfunktionen zerstört werden.

Eine weitere Variante der 2-Komponenten-Membran sieht vor, daß die Membran zunächst in ihrer gesamten Fläche aus ionenleitendem Material hergestellt wird. Nachträglich wird der äußere Bereich der Membran modifiziert, so daß durch Abbau- und oder Vernetzungsreaktionen die hohe Wasserquellung stark reduziert wird. Die Nachbehandlung kann beispielsweise eine Temperaturbehandlung sein, wobei die Membran zwischen zwei heißen Platten auf Temperaturen oberhalb von 200°C erhitzt wird. Wichtig ist dabei, daß nur die äußeren Bereiche der Membran der hohen Temperatur ausgesetzt sind, so daß der mittlere Bereich der Membranoberfläche weiterhin ionisch leitend bleibt und als Festelektrolyt dienen kann.

Je nach Aufbau der Polymer-Brennstoffzelle kann eine unterschiedliche Größe der Membran gefordert sein. Eine Variante sieht vor, daß die Membran kleiner ist als der Gasverteilerring. Sie ist so groß, daß sie noch teilweise mit ihm überlappt, sie aber nicht bis an die Bohrung für die Gas-/Wasserkanäle heranreicht. Eine zweite Variante sieht vor, daß die Membran die gleiche Größe hat wie der Gasverteilerring und selbst Bohrungen für Gas-/Wasserkanäle enthält.

Auch zur Herstellung der Stromverteilerstrukturen muß das polymere Basismaterial modifiziert werden. Im Brennstoffzellenstack liegt die Stromverteilerstruktur zwischen der bipolaren Platte und der mit Katalysator beschichteten Membran. Sie sorgt für eine über die Membranfläche gleichmäßige Stromzuleitung/-ableitung bzw. Gaszufuhr/-abfuhr. Das Material muß deshalb die Eigenschaften haben, gasdurchlässig und elektrisch leitend zu sein. Als Konstruktionswerkstoff sind herkömmliche Materialien, wie z.B. Netze oder Gewebe aus Metall cder Kohlefasern, poröse Metallsinterkörper oder poröse Kohlepapiere möglich. Ebenso können als Konstruktionswerkstoff leitfähige Polymermaterialien Verwendung finden, wobei das Material zur Erzielung der Gasdurchlässigkeit porös sein muß. Die Porosität kann beispielsweise durch vor der Verarbeitung des Konstruktionswerkstoffes zugegebene feingemahlene, in Wasser, Säuren oder Laugen lösliche anorganische Salze erreicht werden, die nachträglich herausgelöst werden und die poröse Struktur erzeugen.

Erfindungsgemäß wird nun vorgeschlagen, daß einzelne Bauteile untereinander durch ein Verbundverfahren, z.B. Verschweißen oder Verkleben, zusammengefügt werden. Dadurch ist es nun möglich, daß Brennstoffzellen, bzw. Brennstoffzellenstacks aufgebaut werden können, die entweder gar keine Dichtung oder nur sehr wenig Dichtungsmaterial benötigen.

Weitere Merkmale, Einzelheiten und Vorzüge der Erfindung ergeben sich aus der folgenden Beschreibung eines Ausführungsbeispiels der Erfindung sowie anhand der Figuren 1 - 7. Das Ausführungsbeispiel betrifft einen Brennstoffzellenstack.

Hierbei zeigen:

Figur 1 den prinzipiellen Aufbau eines Wasserstoff-/Sauerstoff-Brennstoffzellenstacks des Standes der Technik.

Figur 2 einen herkömmlichen Brennstoffzellenstack im Bereich des Aufbaus "bipolare Platte Ionenaustauschermembran".

Figur 3 zeigt den erfindungsgemäßen Aufbau des Bereichs "bipolare Platte, Ionenaustauschermembran", wobei die Verteilereinheit aus zwei Einzelkomponenten besteht.

Figur 4 zeigt den erfindungsgemäßen Aufbau des Bereichs "bipolare Platte Ionenaustauschermembran", wobei die Verteilereinheit aus einer Komponente besteht.

Figur 5 zeigt den Gesamtaufbau einer polymeren Brennstoffzelle mit einem Dichtungsring.

Figur 6 zeigt den Gesamtaufbau einer Einzelzelle ohne Dichtungsringe.

Figur 7 zeigt den Aufbau des Kernbereichs eines Brennstoffzellenstacks mittels der Bauteile C.

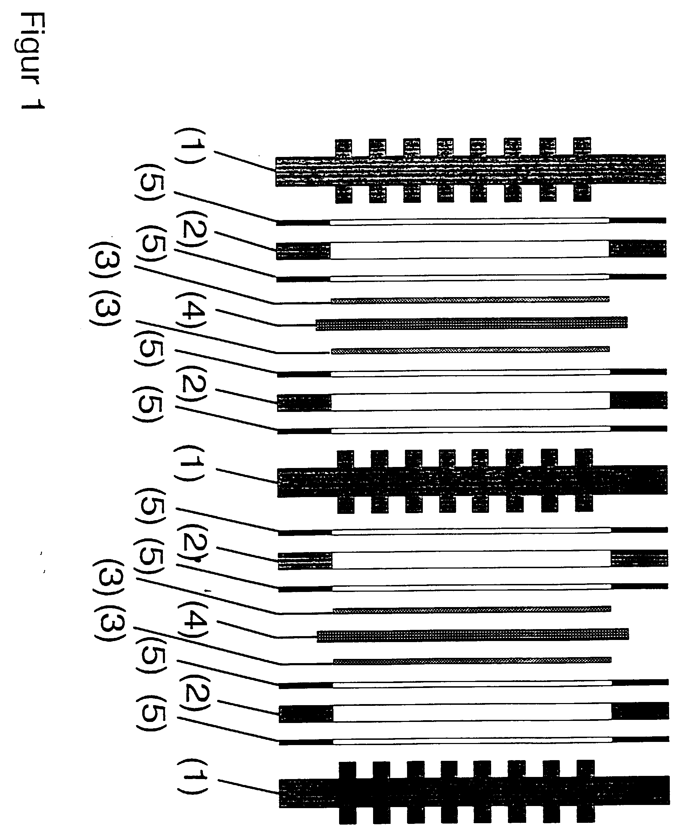

Figur 1 zeigt den prinzipiellen Aufbau eines Wasserstoff-/Sauerstoff-Brennstoffzellenstacks wie er aus dem Stand der Technik bekannt ist. Die für die Konstruktion des Stacks einer Wasserstoff-/Sauerstoff-Brennstoffzelle wichtigen Einzelbauteile bestehen für eine Zelleneinheit üblicherweise aus einer bipolaren Platte 1, dem Gasverteilerring 2, der Ionenaustauschermembrane 4, und den Stromverteilerstrukturen 3. Auf die Darstellung der Katalysatorbeschichtung der Membran wird in dieser wie in den folgenden Figuren aus Übersichtsgründen verzichtet, da sie für die folgende Beschreibung nicht wesentlich ist.

Der in Figur 1 wiedergegebene prinzipielle Aufbau zeigt dabei den Kernbereich des Brennstoffzellenstacks. Dieser Kernbereich ist dann noch von entsprechenden positiven bzw. negativen Endplatten begrenzt. Um die Dichtigkeit der einzelnen Bauteile gegeneinander zu gewährleisten, sind Dichtungen 5 vorgesehen. Die Dichtungen 5 sind dabei jeweils zwischen der bipolaren Platte 1 und dem Gasverteilerring 2 sowie zwischen dem Gasverteilerring 2 und der Membran 4 angeordnet. Die Brennstoffzelle wird dann anschließend durch Druck zusammengepreßt.

Wie bereits bei der Schilderung des Standes der Technik ausgeführt, bringt die Verwendung von Dichtungsmaterialien gravierende Nachteile mit sich. Durch die mechanische Deformierbarkeit des Dichtungsmaterials kommt es einerseits zu Veränderungen der geometrischen Lage einzelner Bauteile zueinander, andererseits tritt durch eine Dauerbelastung des Dichtungsmaterials bei erhöhten Temperaturen eine Versprödung bzw. Degradation ein.

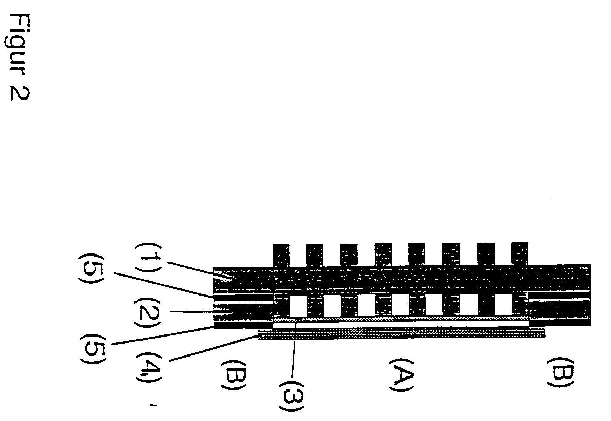

Figur 2 zeigt nun den prinzipiellen Aufbau des Bereichs "bipolare Platte Ionenaustauschermembran" bei einem herkömmlichen Brennstoffzellenstack. Zwischen der bipolaren Platte 1 und dem Ionenaustauschermembran 4 sind zwei Dichtungsringe 5, der Gasverteilerring 2 sowie die Stromverteilerstrukturen 3 angeordnet. Wesentlich dabei ist, daß die Ionenaustauschermembran 4 in den Bereichen A und B auf Flächen aufliegt, von denen nicht sichergestellt ist, daß sie in einer Ebene liegen. Im Bereich A liegt die Membran 4 auf einem fixen Untergrund, wohingegen im Bereich B die Dicke des Blockes (Dichtung-Verteilerringdichtung) je nach Anpreßdruck und Bauteiltoleranzen veränderlich ist. Deshalb bildet sich beim Übergang vom Bereich A zu B eine Höhendifferenz in der Auflagefläche der Membrane aus, die zu scharfen Knicken und potentiellen Bruchstellen in der Membran führt.

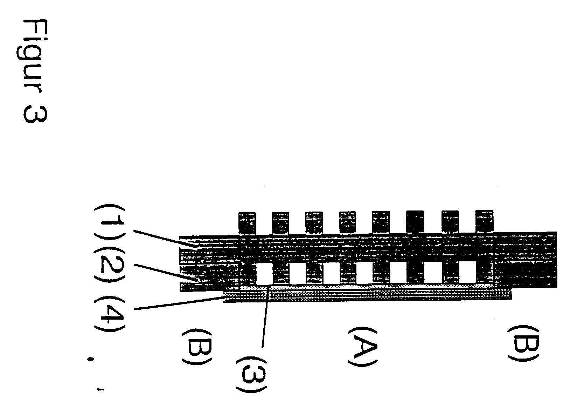

Figur 3 zeigt nun die erfindungsgemäße Lösung für den Bereich "bipolare Platte Ionenaustauschermembran". Die erfindungsgemäße Polymer-Brennstoffzelle umgeht das anhand von Figur 2 geschilderte Problem, in dem die bipolare Platte 1 und der Gasverteilerring 2 aus dem gleichen polymeren Grundmaterial bestehen und dabei miteinander verschweißt oder verklebt werden können. Mit dieser Konstruktion kann man nun sicherstellen, daß der Membranuntergrund in den Bereichen A und B immer in einer Ebene liegt, sc daß keine gefährlichen Materialknicke entstehen können. Auf die Verwendung von Dichtungen in diesem Bereich kann somit verzichtet werden. Dabei kann die Membrane 4 mit dem Gasverteilerring 2 verklebt oder verschweißt werden.

Ein derartiges Verbundverfahren ist aber nicht notwendigerweise gefordert, sondern die erfindungsgemäße Lösung kann auch verwirklicht werden, in dem beide Bauteile durch Druckanwendung zusammengepreßt werden.

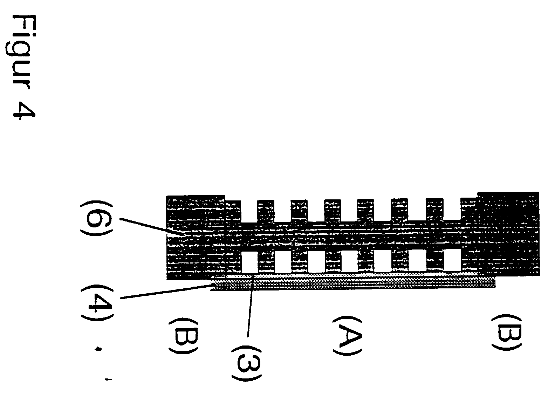

Eine alternative Lösung für den Aufbau des Bereichs "bipolare Platte Ionenaustauschermembran" ist in Figur 4 wiedergegeben. Anstelle der verklebten oder verschweißten Kombination aus bipolarer Platte 1 und Gasverteilerring 2 kann ein aus einem Stück gefertigte Verteilereinheit 6 verwendet werden.

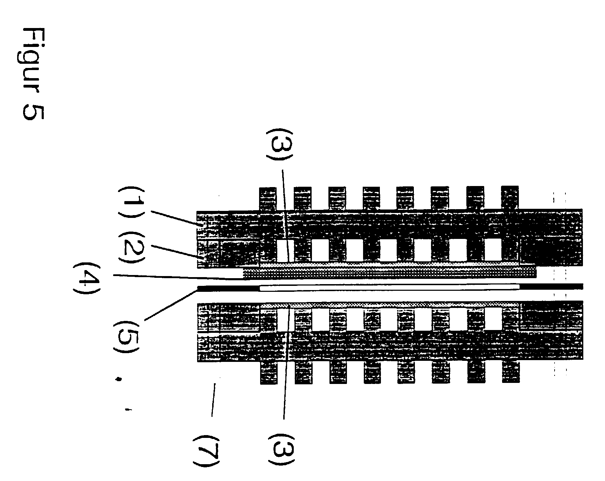

Der Gesamtaufbau einer Einzelzelle für einen Stack mit einem Dichtungsring 5 geht aus Figur 5 hervor. Nach Figur 5 ist für jede Zellhälfte die jeweilige bipolare Platte 1 mit dem jeweiligen Gasverteilerring 2 verschweißt oder verklebt und bildet die sogenannte Verteilereinheit. Die Stromverteilerstruktur 3 kann dabei ebenfalls mit der bipolaren Platte 1 verschweißt oder verklebt sein, sofern das gewählte Material der Stromverteilerstruktur 3 eine entsprechende Verarbeitung zuläßt. Erfindungsgemäß wird dieser Aufbau dabei als Halbzelle bezeichnet.

Auf einer Halbzelle wird nun die Membran 4 fixiert, wobei sie mit dem Gasverteilerring 2 verschweißt oder verklebt sein kann, aber nicht notwendigerweise sein muß. Die Membran 4 ist dabei in ihrem Durchmesser so bemessen, daß sie, vom Mittelpunkt aus betrachtet, etwas über den Anfang des Gasverteilerrings 2 hinausreicht, aber noch deutlich von den Bohrungen 7 für die Gas-/Wasserkanäle endet. Die Anbindung der beiden Halbzellen erfolgt mit einem Dichtungsring 5. Der Dichtungsring 5 enthält Bohrungen 7 für die Gas-/Wasserkanäle und bedeckt sowohl das Ende der Membran 4 als auch den Gasverteilerring 2, so daß eine Abdichtung der Halbzellen gegeneinander und eine Abdichtung der Halbzellen gegen die Gas-/Wasserkanäle gegeben ist. Die Membran 4 basiert auf dem thermoplastischen Grundmaterial und kann entweder nur aus ionenleitenden Materialien oder aber aus einer Kombination von nichtionenleitendem und ionenleitendem Grundmaterial, wie vorstehend beschrieben, bestehen. Alternativ kann gemäß anstelle der verklebten oder verschweißen Kombination aus bipolarer Platte 1 und Gasverteilerring 2 ein aus einem Stück gefertigte Verteilereinheit 6 verwendet werden.

Der Aufbau einer einfachen Brennstoffzelle erfolgt analog. Statt der Ausgestaltung der Stromableiter 1 als bipolare Platte wird eine Endplatte verwendet. Die Brennstoffzelle wird dann aus zwei derartigen Halbzellen, d.h. aus einer Halbzelle mit einer positiven Endplatte und einer Halbzelle mit einer negativen Endplatte aufgebaut (nicht abgebildet). Der Verbund mit der Membrane 4 erfolgt wie vorstehend für die Einzelzelle des Stacks beschrieben.

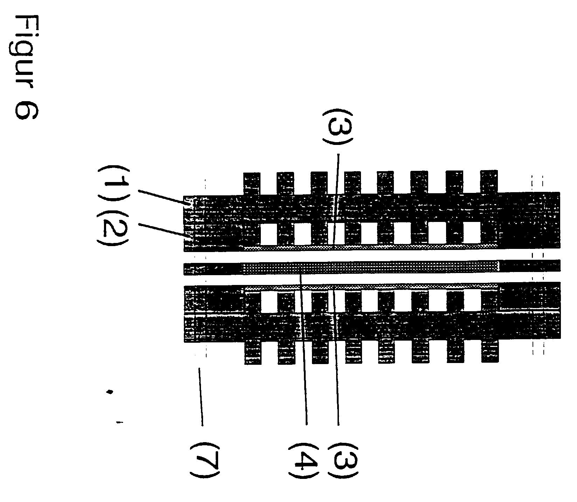

Figur 6 zeigt den Gesamtaufbau einer erfindungsgemäßen Einzelzelle ohne Dichtungsringe. Nach Figur 6 ist für jede Halbzelle die jeweilige bipolare Platte 1 mit dem jeweiligen Gasverteilerring 2 verschweißt oder verklebt und bildet die sogenannte Verteilereinheit. Die Stromableiterstruktur 3 kann ebenfalls mit der bipolaren Platte 1 verschweißt oder verklebt sein, sofern das gewählte Material der Stromverteilerstruktur eine entsprechende Verarbeitung zuläßt. Die Membran 4 hat in diesem Fall den gleichen Durchmesser wie die Gasverteilerringe 2 und enthält die Bohrungen 7 für die Gas-/Wasserkanäle. Die Membran 4 wird auf beiden Seiten mit dem Gasverteilerring 2 der jeweiligen Halbzelle verschweißt oder verklebt. Die Membran 4 basiert erfindungsgemäß auf dem thermoplastischen Grundmaterial und kann entweder nur aus ionenleitendem Material oder aber aus einer Kombination von nichtionenleitendem und ionenleitendem Grundmaterial, wie vorstehend beschrieben, bestehen. Auch bei dieser Ausführungsform kann alternativ statt der Kombination aus bipolarer Platte 1 und Gasverteilerring 2 ein aus einem Stück gefertigte Verteilereinheit 6 verwendet werden.

Wie bereits bei der Figurenbeschreibung der Figur 5 erläutert, kann eine Einzelzelle analog unter Verwendung von positiven und negativen Endplatten ohne Dichtung aufgebaut werden. Statt der jeweiligen bipolaren Platte 1 wird dann eine positive bzw. negative Endplatte verwendet.

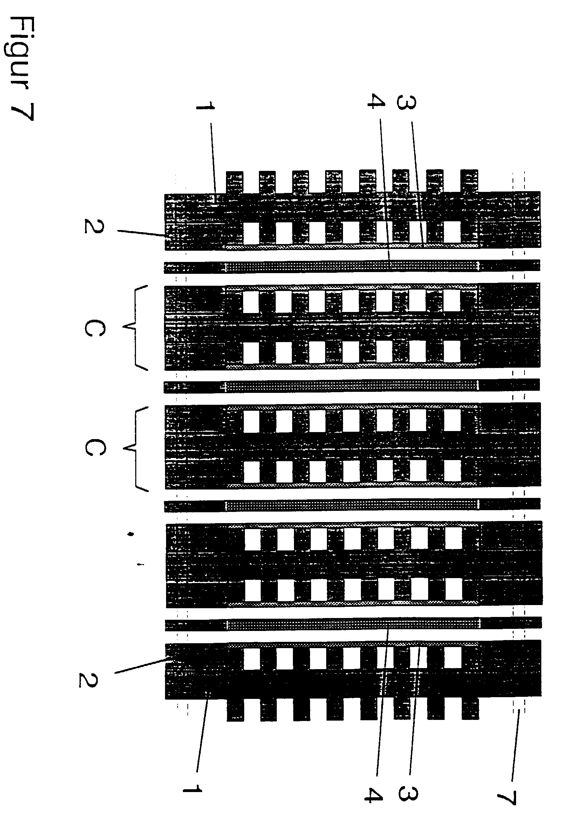

Ein Brennstoffzellenstack (Figur 7) ist nun aus mehreren dieser Einzelzellen aufgebaut. Der Kernbereich des Brennstoffzellenstacks ist dabei in der Art aufgebaut, daß beidseitig einer bipolaren Elektrode 1 jeweils in Richtung des Inneren der Einzelzellen hin ein Stromverteiler 3 und ein Gasverteilerring 2 wie vorstehend beschrieben, angeordnet ist. Diese Baueinheit wird erfindungsgemäß als Bauteil C bezeichnet. Der Kernbereich wird nun aus n dieser Bauteile C gebildet, wobei diese n-Bauteile C wiederum über Membrane 4 verbunden sind. In Figur 7 ist zur besseren Übersichtlichkeit zwischen der Membrane 4 und dem Bauteil C ein freier Raum vorhanden. Im fertigen Brennstoffzellenstack ist selbstverständlicherweise die Membrane 4 dann wie vorstehend beschrieben, mit der Baueinheit C verbunden. Der Kernbereich des Brenn- stoffzellenstacks kann dabei wie vorstehend bei den einzelnen Zellen schon beschrieben, wieder alternativ aus einer Verteilereinheit 6 aus einer Einheit aufgebaut sein. Selbstverständlich ist auch ein Aufbau einer erfindungsgemäßen Zelle möglich, bei der jeweils zwischen der Membrane 4 und der Baueinheit C ein einzelnder Dichtungsring vorgesehen ist, analog Figur 5.

Bevorzugterweise werden zum Aufbau einer kompletten Brennstoffzelle 2 - 300 Bauteile C verwendet. Die komplette Brennstoffzelle wird dann von einer positiven und auf der gegenüberliegenden Seite von einer negativen Endplatte, die wiederum über verschweißte oder verklebte Membran mit der Kerneinheit verbunden sind, gebildet.

Ein abschließender dauerhafter Zusammenhalt der einzelnen Bauteile der Brennstoffzelle bzw. des Brennstoffzellenstacks ist notwendig, um einen guten Kontakt der mit Katalysator beschichteten Membranseiten mit den Stromverteilerstrukturen zu gewährleisten und um die Zelldichtigkeit zu garantieren. Ein dauerhafter Zusammenhalt der Bauteile kann dadurch erreicht werden, daß die Konstruktion durch abschließende Verschraubung oder ähnliche mechanische Maßnahmen unter Druck zusammengefügt wird. Ebenso ist es möglich, durch abschließendes Verschweißen/Verkleben der einzelnen Verteilereinheiten miteinander den Zusammenhalt zu gewährleisten. Hierbei können Hilfsstoffe zur Verwendung kommen, wie beispielsweise Folien/Platten aus unmodifiziertem polymerem Grundmaterial, welche zur Herstellung der dauerhaften Verbindung um die zu verbindenden Verteilereinheiten gelegt und mit ihnen verschweißt/verklebt werden.

Erfindungsgemäß ist vorgesehen, daß die einzelnen Bauteile oder wie vorstehend beschrieben, die fertige Brennstoffzelle durch ein Verbundverfahren zusammengehalten werden. Das Konzept, alle Komponenten der Brennstoffzelle aus dem gleichen Grundmaterial aufzubauen, ermöglicht nun ein stabiles Verbinden z.B. durch Verkleben oder Verschweißen, da keinerlei Unverträglichkeiten bzw. Entmischungen zu erwarten sind, wie sie bei den Einzelbauteilen der Brennstoffzellen des Standes der Technik die Regel sind.

Erfindungsgemäß wird als Verbundverfahren bevorzugt Verschweißen oder Verkleben angewandt.

Unter Kunststoffschweißen wird erfindungsgemäß das Vereinigen von thermoplastischen Kunststoffen unter Anwendung von Wärme und Kraft ohne oder mit Schweißzusatz verstanden.

Hierzu müssen die Fügeteiloberflächen in den plastischen Zustand gebracht werden. Prinzipiell kann die Anbindung der Bauteile mit einem der nachfolgend beschriebenen Verfahren erfolgen, wobei die unterschiedlichen Schweißverfahren danach eingeteilt werden, auf welchem Weg die Fügeteiloberflächen in den plastischen Zustand überführt werden. Insbesondere kommen folgende Schweißverfahren in Betracht:
1.) Heizelementschweißen: Die Fügeflächen werden durch vorwiegend elektrisch beheizte metallische Bauelemente erwärmt. Die Wärme kann direkt vom Heizelement zu den Fügeflächen fließen (direktes Heizelementschweißen) oder sie kann durch ein Fügeteil hindurch zu den Fügeflächen fließen (indirektes Heizelementschweißen).
2.) Ultraschallschweißen: Die Plastifizierung der Oberflächen erfolgt durch die Einspeisung von Ultraschall. Das Ultraschallschweißen beruht auf dem mechanischen Dämpfungsvermögen des Polymers. Die mechanische Dämpfung ist bei nahezu allen Kunststoffen so groß, daß die Schweißbarkeit nach dem Ultraschallverfahren gegeben ist.

Andere Schweißverfahren sind prinzipiell möglich (Warmgasschweißen, Reibschweißen oder Hochfrequenzschweißen), eignen sich aber nicht für alle Kunststoffmaterialien oder Formtypen. Vcm Polyethersulfon ist bekannt, daß das Material mittels Wärme- oder Ultraschallschweißen bearbeitbar ist.

Bevorzugt ist als weiteres Verbundverfahren das Verbinden durch Kleber.

Die Haftfestigkeit einer Klebeverbindung wird durch Adhäsich und Kohäsion beeinflußt, wobei unter Adhäsion die Bindungskräfte an den Grenzflächen zwischen den zu klebenden Körpern und dem Klebstoff und unter Kohäsion die Bindungskräfte im Klebstoff selber verstanden werden. Prinzipiell sind alle Klebstoffarten zur Verbindung der Komponenten der Polymerbrennstoffzelle denkbar, wie Lösungsmittelklebstoffe, Dispersionsklebstoffe, Schmelzklebstoffe, Kontaktklebstoffe, Polymerisations-, Polyadditions- und Polykondensationsklebstoffe.

Insbesondere werden jedoch aufgrund der Löslichkeit der Komponenten der Polymer-Brennstoffzelle Lösungsmittelklebstoffe verwendet. Als Lösemittelkomponenten des Klebstoffsystems kommen solche in Frage, in denen beide Fügeteile löslich sind. Das Lösemittel diffundiert zum Teil in die Fügeteile ein, so daß die Wechselwirkungen zwischen Klebstoff und Fügeteil begünstigt werden (gute Adhäsion).

Im Fall des Polyethersulfons als polymerem Grundmaterial und des sulfonierten Polyethersulfons als ionenleitendem Material kann beispielsweise Dimethylformamid verwendet werden. Als Polymerkcmponente im Klebstoffsystem dient entweder das polymere Grundmaterial selber, das modifizierte ionenleitende Grundmaterial, Gemische aus beiden oder Copolymere, insbesondere Block- und Pfropfcopolymere. Im Fall der Verklebung zweier Flächen aus polymerem Grundmaterial wird vornehmlich dieses Material auch Bestandteil des Klebstoffsystems sein, da dann auf jeden Fall aufgrund der Mischbarkeit der Polymerkomponenten von Klebstoff und Fügeteilen eine dauerhafte Verbindung realisiert werden kann (gute Adhäsion). Da die Polymerkomponente im Klebstoff aus dem gleichen Material ist wie die Fügeteile selbst, ist gleichfalls eine gute Kohäsion gegeben. Copolymere als Klebstoffkomponente finden insbesondere dann Anwendung, wenn nicht exakt gleiche Materialien verklebt werden sollen, wie z.B. ionenleitendes und nicht ionenleitendes Material. Pfropf- und Blockcopolymere können dann zu einer festen Anbindung der im allgemeinen nicht mischbaren Materialien beim Verkleben beisteuern, da beide Materialien in den Block- bzw. Pfropfcopolymeren durch chemische Bindung auf molekularer Ebene verknüpft sind.

Ebenfalls möglich ist das Fügen mit reinen Lösemitteln ohne Polymerzusatz, welches auch als Quellschweißen bezeichnet wird.

Im Fall des Verklebens zweier leitfähiger Stücke kann es nötig werden, daß die oben erläuterte Zusammensetzung des Klebstoffs durch die Zugabe leitfähiger Partikel erweitert wird, um die elektrische Leitfähigkeit der Verklebung zu gewährleisten.

## Patentansprüche

1. Brennstoffzelle mit Stromableiter, polymeren Festelektrolyten in Form von Membranen, Gasverteilerringen und Stromverteiler als Bauteile,
dadurch **gekennzeichnet**,
daß alle Bauteile aus einem thermoplastischen, in einem Lösungsmittel löslichen Grundpolymer gefertigt sind und daß dieses Grundpolymer für die einzelnen Bauteile so modifiziert ist,
daß die Stromableiter (1) elektrisch leitfähig, die Membrane (4) ionenleitfähig, die Stromverteiler (3) gasdurchlässig und elektrisch leitfähig und die Gasverteilerringe (2) aus nichtmodifiziertem und/oder elektrisch leitfähigem Grundpolymer sind, und
daß die Bauteile durch ein Verbundverfahren zusammengefügt sind, wobei das Grundpolymer ein Homopolymer ist, das aus Monomereinheiten aufgebaut ist, die aus
der Gruppe der Polysulfone der allgemeinen Formel I
-[-SO₂-R₁-O-R₂-C(CH₃)₂-R₃-O-R₄-]- (I)
mit
R₁, R₂, R₃, R₄ = -C₆H₄-, -C₁₀H₆-,
der Gruppe der Polyethersulfone der allgemeinen Formel II
-[[-SO₂-R₁-]ₙ[-O-R₂-]ₘ]- (II)
mit
R₁, R₂ = -C₆H₄-, -C₁₀H₆- ;
n, m = 1,2,
der Gruppe der Polyetherketone der allgemeinen Formel III
-[[-CO-R₁-]ₙ[-O-R₂-]ₘ]- (III)
mit
R₁, R₂ = -C₆H₄-, -C₁₀H₆- ;
n, m = 1,2
oder aus der Gruppe der Polyphenylensulfide der allgemeinen Formel IV
-[-S-R₁-]- (IV)
R₁ = -C₆H₄-
ausgewählt sind.

2. Brennstoffzelle nach Anspruch 1,
dadurch gekennzeichnet, daß das thermoplastische Grundpolymer ein Copolymer aus den Monomereinheiten nach Anspruch 1 ist.

3. Brennstoffzelle nach Anspruch 1 oder 2,
dadurch gekennzeichnet, daß sie aus einer ersten Halbzelle, bestehend aus einem ersten Stromableiter, einem Gasverteilerring und einem Stromverteiler, besteht, die ohne Dichtung über eine Elektrodenmembran mit einer zweiten Halbzelle, bestehend aus einem zweiten Stromverteiler, einem zweiten Gasverteilerring und einem zweiten Stromableiter, verbunden ist.

4. Brennstoffzelle nach Anspruch 1 oder 2,
dadurch gekennzeichnet, daß sie in Form eines Brennstoffzellenstapels aufgebaut ist in der Art, daß beidseitig eines bipolaren Stromableiters (1) jeweils in Richtung des Inneren der Einzelzellen ein Stromverteiler (3) und ein Gasverteilerring (2) angeordnet sind (Bauteil C), wobei n-Bauteile C jeweils über Membrane (4) zusammengefügt sind, daß diese n-Bauteile C von Halbzellen A nach Anspruch 2 begrenzt sind, und daß die Halbzellen jeweils wieder über Membrane (4) mit den n-Bauteilen C verbunden sind, wobei n im Bereich von 2 bis 300 liegt.

5. Brennstoffzelle nach mindestens einem der Ansprüche 1 bis 4,
dadurch gekennzeichnet, daß die Verbindung der Halbzellen oder der Baueinheit C mit der Membran bzw. den Membranen über eine Dichtung (5) erfolgt.

6. Brennstoffzelle nach mindestens einem der Ansprüche 1 bis 5,
dadurch gekennzeichnet, daß der Stromableiter (1) mit dem jeweiligen Gasverteilerring (2) durch Verkleben oder Verschweißen zusammengefügt ist und eine Verteilereinheit (6) bildet.

7. Brennstoffzelle nach Anspruch 6,
dadurch gekennzeichnet, daß die Verteilereinheit (6) einstückig ist und mittels eines geeigneten Verfahrens zur Verarbeitung thermoplastischer Polymere, wie beispielsweise Spritzgießen oder Pressen, aus modifiziertem polymerem Grundmaterial, das elektrisch leitfähig ist, hergestellt ist.

8. Brennstoffzelle nach mindestens einem der Ansprüche 1 bis 7,
dadurch gekennzeichnet, daß der Stromverteiler (3) mit der Verteilereinheit (6) durch Verschweißen oder Verkleben zusammengefügt ist.

9. Brennstoffzelle nach mindestens einem der Ansprüche 1 bis 8,
dadurch gekennzeichnet, daß die einzelnen Bauteile der Brennstoffzelle durch geeignete Maßnahmen unter Druck gehalten sind.

10. Brennstoffzelle nach Anspruch 9,
dadurch gekennzeichnet, daß die einzelnen Bauteile durch Verschrauben unter Druck gehalten sind.

## Claims

1. Fuel cell with current collector, solid polymer electrolytes in the form of membranes, gas distributor rings and current distributor as components,
**characterised in that** all the components are made from a thermoplastic basic polymer which is soluble in a solvent, and that this basic polymer is modified for the individual components in such a way that the current collectors (1) are electrically conductive, the membranes (4) are ionically conductive, the current distributors (3) are permeable to gas and electrically conductive and the gas distributor rings (2) are made of non-modified and/or electrically conductive basic polymer, and
in that the components are joined together by a bonding process, the basic polymer being a homopolymer which is constructed from monomeric units which are chosen from the group of polysulfones of the general formula I
-[-SO₂-R₁-O-R₂-C(CH₃)₂-R₃-O-R₄-]- (I)
with
R₁, R₂, R₃, R₄, = -C₆H₄-, -C₁₀H₆-,
from the group of polyethersulfones of the general formula II
-[[-SO₂-R₁-]ₙ[-O-R₂-]ₘ]- (II)
with
R₁ , R₂, = -C₆H₄-, -C₁₀H₆- ;
n, m = 1,2,
from the group of polyetherketones of the general formula III
-[[-CO-R₁-]ₙ[-O-R₂-]ₘ]- (III)
with
R₁, R₂ = -C₆H₄-, -C₁₀H₆- ;
n, m = 1,2
or from the group of polyphenylene sulfides of the general formula IV
- [-S-R₁-]- (IV)
R₁ = -C₆H₄-

2. Fuel cell according to claim 1, **characterised in that** the thermoplastic basic polymer is a copolymer made from the monomeric units according to claim 1.

3. Fuel cell according to claim 1 or 2, **characterised in that** it consists of a first half cell comprising a first current collector, a gas distributor ring and a current distributor, which half cell is connected without any seal via an electrode membrane to a second half cell, comprising a second current distributor, a second gas distributor ring and a second current collector.

4. Fuel cell according to claim 1 or 2, **characterised in that** it is constructed in the form of a fuel cell stack in such a way that a current distributor (3) and a gas distributor ring (2) are arranged (component C) on both sides of a bipolar current collector (1) in each case in the direction of the inside of the individual cells, n components C being in each case joined via membranes (4), in that these n components C are separated from half cells A according to claim 2 and in that the half cells are in each case joined again via membranes (4) with the n components C, n lying in the range of 2 to 300.

5. Fuel cell according to one of claims 1 to 4, **characterised in that** the half cells or the assembly C are/is joined to the membrane or membranes via a seal (5).

6. Fuel cell according to at least one of the claims 1 to 5, **characterised in that** the current collector (1) is joined to the respective gas distributor ring (2) by gluing or bonding and forms a distributor unit (6).

7. Fuel cell according to claim 6, **characterised in that** the distributor unit (6) is one piece and manufactured by means of a suitable method of processing thermoplastic polymers, such as, for example, injection moulding or pressing, from modified polymer basic material which is electrically conductive.

8. Fuel cell according to at least one of claims 1 to 7, **characterised in that** the current distributor (3) is joined to the distributor unit (6) by bonding or gluing.

9. Fuel cell according to at least one of claims 1 to 8, **characterised in that** the individual components of the fuel cell are held under pressure by suitable means.

10. Fuel cell according to claim 9, **characterised in that** the individual components are held under pressure by being screwed down.

## Revendications

1. Pile à combustible avec collecteur de courant, électrolytes solides polymères sous forme de membranes, d'anneaux distributeurs de gaz et de distributeurs de courant comme pièces constitutives,
caractérisée en ce qu'
on réalise toutes les pièces constitutives en un polymère de base soluble dans un solvant et qu'on modifie ce polymère de base pour chaque pièce constitutive, de sorte que les collecteurs de courant (I) sont électriquement conducteurs, la membrane (4) est ioniquement conductrice, le distributeur de courant (3) est perméable aux gaz et électriquement conducteur et les anneaux distributeurs de gaz (2) sont en polymère de base non modifié et/ou électriquement conducteurs et on assemble les pièces constitutives par un procédé d'assemblage où le polymère de base est un homopolymère, qui est constitué de motifs monomères qui sont choisis dans le groupe des polysulfones de formule générale I,
[-SO₂-R₁-O-R₂-C(CH₃)₂-R₃-O-R₄-]- (I)
avec
R₁, R₂, R₃, R₄ = -C₆H₄-, -C₁₀H₆-,
Le groupe des Polyéthersulfones de formule générale (II)
[[-SO₂-R₁-]ₙ[-O-R₂-]ₘ]- (II)
avec
R₁, R₂ = -C₆H₄-, -C₁₀H₆- ;
n, m = 1,2
Le groupe des Polyéthercétones de formule générale (III)
[[-CO-R₁-]ₙ[-O-R₂-]ₘ]- (III)
avec
R₁, R₂ = -C₆H₄-, -C₁₀H₆- ;
n, m = 1,2
ou le groupe des Poly(sulfure de phénylène) de formule générale (IV)
-[-S-R₁-]- (IV)
avec
R₁ = -C₆H₄-

2. Pile à combustible selon la revendication 1,
caractérisée en ce que le polymère de base thermoplastique est un copolymère des unités monomères selon la revendication 1.

3. Pile à combustible selon la revendication 2,
caractérisée en ce qu'
elle est constituée d'un premier collecteur de courant, d'un anneau distributeur de gaz et d'un distributeur de courant qui est liée sans joint par une membrane d'électrode à une deuxième demi-cellule, constituée d'un deuxième distributeur de courant, d'un deuxième anneau distributeur de gaz et d'un deuxième collecteur de gaz.

4. Pile à combustible selon la revendication 1 ou 2,
caractérisée en ce qu'
elle est sous forme d'un empilement de piles à combustible de sorte que de chaque côté un collecteur de courant bipolaire (1) sont dirigés respectivement vers l'intérieur de chaque pile un distributeur de courant (3) et un anneau distributeur de gaz (2) (pièce constitutive C), où on assemble n-pièces constitutives C respectivement par l'intermédiaire d'une membrane (4), que ces n-pièces constitutives C sont délimitées par des demi-cellules A selon la revendication 2 et que les demi-cellules sont liées à nouveau par l'intermédiaire d'une membrane (4) aux pièces constitutives C, où n est dans l'intervalle de 2 à 300.

5. Piles à combustible selon au moins l'une des revendications 1 à 4,
caractérisée en ce que
la liaison des demi-cellules ou de l'unité constitutive C avec la membrane ou les membranes se fait par l'intermédiaire d'un joint (5).

6. Piles à combustible selon au moins l'une des revendications 1 à 5,
caractérisée en ce que
le collecteur de courant (1) est assemblé avec chaque anneau distributeur de gaz (2) par collage ou soudure et forme une unité de distributeur (6).

7. Pile à combustible selon la revendication 6,
caractérisée en ce que
l'unité de distributeur (6) est formée d'une pièce et on la produit au moyen d'un procédé approprié de transformation des polymères thermoplastiques, comme par exemple le moulage par injection ou la compression, à partir d'un matériau de base polymère modifié qui est électriquement conducteur.

8. Pile à combustible selon au moins l'une des revendications 1 à 7,
caractérisée en ce que
le distributeur de courant (3) est assemblé avec l'unité de distributeur (6) par soudure ou collage.

9. Pile à combustible selon au moins l'une des revendications 1 à 8,
caractérisée en ce qu'
on maintient sous pression les pièces constitutives individuelles de la pile à combustible par des dispositions appropriées.

10. Pile à combustible selon la revendication 9,
caractérisée en ce qu'
on maintient sous pression les pièces constitutives individuelles par vissage.
